# EUROPÄISCHE PATENTANMELDUNG

(11) **EP 1 460 375 A2**
(43) Veröffentlichungstag der Anmeldung: **22.09.2004**
(21) Anmeldenummer: 04006805.8
(22) Anmeldetag: 22.03.2004
(51) Int. Cl.: G01B 11/02, G01B 11/06

(54) **Verfahren und Vorrichtung zum geometrischen Vermessen eines Materialbandes**

(30) Priorität: 20.03.2003 DE 10312535
(71) Anmelder: IMS Messsysteme GmbH, 42579 Heiligenhaus (DE)
(72) Erfinder: Fackert, Rainer, 56584 Meinborn (DE)
(74) Vertreter: Cohausz & Florack

(57) **Zusammenfassung**

Die Erfindung betrifft ein Verfahren zur geometrischen Vermessung eines Materialbands (2), wobei das Materialband (2) eine Längsrichtung vorgibt, wobei mittels einer ersten Messeinrichtung mit mindestens einer Strahlungsquelle (6) und mit mindestens einem Detektor (8) die Banddicke des Materialbands (2) ermittelt wird, wobei hierfür die Strahlung (10) der Strahlungsquelle (6) das Materialband (2) an mindestens einem im Materialband (2) angeordneten Messpunkt (12) durchdringt und die resultierende Abschwächung der Intensität der Strahlung (10) von dem korrespondierenden Detektor (8) ermittelt wird. Es wird vorgeschlagen, dass mittels einer zweiten Messeinrichtung die Querkontur des Materialbands (2) ermittelt wird. Dabei erfolgen die Messung der Banddicke und der Querkontur an der gleichen Stelle am Materialband. Die Messwerte der Dickenmessung werden mit den Messwerten der Querkontur korrigiert.

Die Erfindung betrifft auch eine Vorrichtung zum Durchführen des Verfahrens.

## Beschreibung

Die Erfindung betrifft ein Verfahren zum geometrischen Vermessen eines Materialbandes nach dem Oberbegriff des Anspruches 1 sowie eine Vorrichtung zur Durchführung des Verfahrens nach dem Oberbegriff des Anspruches 10.

Beim Kalt- und Warmwalzen wird ein Metallblech in Form eines Materialbands erzeugt, das sich in einer Längsrichtung (Förderrichtung) und einer Querrichtung erstreckt. Die Geometrie des erzeugten Materialbands bildet neben den Werkstoffeigenschaften die Grundlage für die Qualitätskontrolle sowie für eine ggf. notwendige Korrektur der Walzparameter in einer Prozesssteuerung. Für eine kontinuierliche Dokumentation der Qualität sowie für die Möglichkeit der Online-Korrektur der Walzparameter ist es daher erforderlich, entsprechende Messungen während des Walzvorgangs durchzuführen, die Aufschluss über die Geometrie des Metallbands geben. Interessierende Größen sind hier u.a. die Banddicke, die Bandbreite und die Planheit des Materialbands. Weiter ist die absolute Lage des Materialbands von Interesse für die Prozesssteuerung, insbesondere bei "fliegenden" Materialbändern.

Zur Messung der Banddicke ist ein Verfahren bekannt, bei dem die von einer Strahlungsquelle erzeugte hochenergetische elektromagnetische Strahlung, wie beispielsweise Röntgen- oder Gammastrahlung, das Materialband im wesentlichen senkrecht zur Bandoberfläche durchtritt, wobei die Intensität der Strahlung in Abhängigkeit von der Banddicke geschwächt wird. Mit im wesentlichen senkrecht bedeutet vorliegend, dass der Strahlengang der Strahlung einen spitzen Winkel mit der Oberflächennormalen des Materialbands aufweist. Die Abschwächung der Strahlung wird durch einen entsprechend angeordneten Detektor gemessen. Dieses Verfahren zur Ermittlung der Banddicke bildet den Ausgangspunkt der vorliegenden Erfindung.

Zur Ermittlung der Banddicke an verschiedenen Stellen über die Breite des Materialbands (Banddickenquerprofil) ist es weiter bekannt, mehrere über die Breite des Materialbands verteilte Strahlungsquellen mit den entsprechenden Detektoren vorzusehen. Das Funktionsprinzip einer derartigen Banddickenmessung geht aus der DE 199 47 572 A1 hervor.

Nachteilig bei der oben beschriebenen Banddickenmessung ist die Tatsache, dass Unebenheiten die Messung grundsätzlich verfälschen, da jede Unebenheit dazu führt, dass von der Strahlung ein längerer oder kürzerer Weg innerhalb des Materials durchlaufen wird, so dass die Messung eine größere oder kleinere Banddicke ergibt, als es der Realität entspricht. Die Unebenheiten lassen sich mit der beschriebenen Meßmethode nicht ermitteln.

Zur Ermittlung der Unebenheiten, oder allgemeiner der Oberflächengeometrie des Materialbands wird in der DE 199 47 572 A1 ein auf der oben beschriebenen Banddickenmessung basierendes Meßsystem vorgeschlagen. Dabei ist es vorgesehen, dass mindestens zwei Strahlungsquellen vorgesehen sind, deren Strahlungen das Materialband durchdringen. Weiter ist eine Mehrzahl von Detektoren vorgesehen, die jeweils auf eine Strahlungsquelle ausgerichtet sind. Dabei sind die Strahlungsquellen und die Detektoren derart angeordnet, dass sich über die Breite des Materialbands verteilte Messpunkte bilden, die jeweils über zwei Detektoren mit unterschiedlicher Ausrichtung ausgewertet werden. Hierfür ist es erforderlich, dass sich in einem Messpunkt die Strahlengänge zweier Strahlungsquellen, die von den entsprechenden Detektoren empfangen werden, schneiden. Mit diesen Messwerten lassen sich die Steigungswerte des Materialbands in den Messpunkten ermitteln. Damit wiederum lässt sich durch Interpolation die Quer- sowie die Längskontur des Materialbands berechnen.

Nachteilig bei dem letztgenannten Verfahren ist die Tatsache, dass die beschriebenen Messpunkte ortsfest sind, so dass jede Verlagerung des Materialbands senkrecht zu seiner Oberfläche zu einer entsprechenden Verfälschung des Messergebnisses führt. Eine solche Verlagerung tritt insbesondere bei fliegenden Bändern auf, die im Bereich der Messpunkte nicht unterstützt und geführt werden. Dort treten die Verlagerungen beispielsweise mit einer Frequenz von ca. 4 bis 6 Hz auf. Die Lageänderung kann dabei sowohl Änderungen des Querprofils an sich als auch die Lage des gesamten Bandes im Raum betreffen. Im ungünstigsten Fall kann es vorkommen, dass der Messpunkt außerhalb des Materialbands liegt. Weiter führt die Messung an diskreten Messpunkten durch die notwendige Interpolation zu einem systembedingten Interpolationsfehler.

Eine Möglichkeit zur präzisen Messung der Oberflächengeometrie bieten optische Verfahren, die Lichtstrahlen in bestimmter Weise auf die Oberfläche des Materialbands projizieren und die durch eine kameragestützte Messung der Reflexionen auf die Oberflächengeometrie schließen lassen.

Ein derartiges Verfahren zeigt die DE 197 09 992 C1. Hier werden mittels einer Lichtquelle eine Mehrzahl von Linien auf der Oberfläche des Materialbands erzeugt, die durch eine CCD-Kamera erfasst und mit einem Referenzmuster verglichen werden. So lassen sich die Unebenheiten des Materialbands ausgehend von der Abweichung des Kamerabildes vom Referenzmuster berechnen. Ein ähnliches Messprinzip ist Gegenstand der EP 0 627 069 B1. Während mit diesen beiden Messverfahren eine präzise Ermittlung der Oberflächengeometrie gewährleistet wird, ist eine Banddickenmessung allerdings nicht möglich.

Einen Ansatz zur Steigerung der Leistungsfähigkeit im Hinblick auf den Umfang der ermittelten Informationen über die Geometrie des Materialbands liefert wiederum die DE 199 47 572 A1. Hier wird auf die Anwendung der eingangs beschriebenen Banddickenmessung parallel zu einem optischen, auf Projektion basierenden Messverfahren zur Ermittlung der Oberflächengeometrie des Materialbands hingewiesen. Allerdings kann ein derartig paralleler Betrieb allein nicht zu einer Optimierung der Messergebnisse führen.

Der Erfindung liegt das technische Problem zugrunde, das bekannte Verfahren derart auszugestalten und weiterzubilden, dass die Leistungsfähigkeit des Meßsystems im Hinblick auf Fehlerrobustheit und Informationsbereitstellung erhöht wird.

Das zuvor aufgezeigte technische Problem wird zunächst durch ein Verfahren mit den Merkmalen des Anspruches 1 gelöst.

Erfindungsgemäß handelt es sich um ein Verfahren, bei dem mittels einer ersten Messeinrichtung die Banddicke an mindestens einem im Materialband angeordneten Messpunkt ermittelt wird, bei dem mittels einer zweiten Messeinrichtung die räumliche Lage und Ausrichtung des Materialbands relativ zu einer Referenzposition ermittelt wird und bei dem eine Korrektur der Messwerte der ersten Messeinrichtung durch die Messwerte der zweiten Messeinrichtung durchgeführt wird.

Somit ist erkannt worden, dass die beiden bisher separat angewendeten Verfahren miteinander verbunden werden können um eine erhöhte Genauigkeit der Messwerte und somit eine erhöhte Robustheit des Messverfahrens zu erreichen. Darüber hinaus wird erfindungsgemäß nicht nur die Banddicke genauer erfasst, sondern es wird daneben auch die genaue räumliche Position im Raum einschließlich des Längs- und Querprofils des Materialbandes erfasst. Die gesamten Informationen können dann für eine Steuerung des Herstellungsprozesses des Materialbandes eingesetzt werden.

In bevorzugter Weise wird mittels der ersten Messeinrichtung eine Messung der Banddicke basierend auf der Durchdringung des Materialbands mit hochenergetischer elektromagnetischer Strahlung durchgeführt. Mittels der zweiten Messeinrichtung wird dann ebenfalls bevorzugt durch optische Hilfsmittel die Querkontur, also der Form und Lage des Materialbands in Querrichtung, sowie ggf. gleichzeitig auch die Längskontur ermittelt. Dabei werden beide Messungen vorzugsweise im wesentlichen an der gleichen Stelle am Materialband durchgeführt.

Für eine Stelle am Materialband liegen also einerseits Informationen zur Banddicke und andererseits zur Längs- und Querkontur (Form und Lage im Raum) vor. Dies bietet grundsätzlich die Möglichkeit, die Banddickenmessung zu optimieren, deren Messwerte bei auftretenden Unebenheiten des Querprofils wie auch durch Lageänderungen des Materialbandes im Raum relativ zu den Messeinrichtungen verfälscht wird. Mit den Messwerten der zweiten Messeinrichtung sind die Unebenheiten und Lageänderungen bekannt, so dass die Messwerte der ersten Messeinrichtung entsprechend korrigiert werden können. Das bedeutet, dass die Messwerte einzelnen realen Positionen im Materialband zugeordnet werden können, auch dann, wenn das Materialband sich beabstandet zur Referenzposition befindet.

Die Ermittlung der Querkontur erfolgt in bevorzugter Weise dadurch, dass zunächst eine Projektionseinrichtung eine Linie auf die Oberfläche des Materialbands im wesentlichen senkrecht zur Längsrichtung projiziert. Mittels einer Kamera wird die projizierte Linie dann in einer Pixelmatrix erfasst. Diese Linie ist bei planem Materialband eine gerade Linie und wird gekrümmt und/oder verschoben, wenn das Materialband Unebenheiten aufweist und/oder in seiner räumlichen Lage von einer Referenzposition bzw. Referenzlinie abweicht. Aus der Änderung der projizierten Linie, die von der Kamera in der Pixelmatrix erfasst wird, lässt sich dann die Längs- und Querkontur, also die Form des Materialbandes, und die Lage des Materialbands im Raum bezogen auf eine Referenzlinie berechnen.

Dabei ist es bevorzugt, dass die Linie entlang des Bereiches des Materialbandes verläuft, in dem die Messpunkte der ersten Messeinrichtung angeordnet sind. Dadurch wird ein optimales Ergebnis der Korrektur der Messwerte der ersten Messeinrichtung durch die Messwerte der Kontur des Materialbandes erreicht.

Eine weitere bevorzugte Ausgestaltung der vorliegenden Erfindung besteht darin, dass die Projektionseinrichtung ein Raster von in Längsrichtung des Materialbandes beabstandeten Linien projiziert. Mit Hilfe einer Kamera wird das Linienraster aufgenommen und anhand der Auswertung der Form des Linienrasters wird die Form und räumliche Lage des Materialbandes zumindest teilweise im von dem Linienraster umfassten Bereich des Materialbandes bestimmt. Somit wird das an sich bekannte Messverfahren des Linienrasters zusammen mit der Messung der ersten Messeinrichtung kombiniert. Durch das Erfassen des Linienrasters wird ein größerer Bereich um die Messpunkte der ersten Messeinrichtung herum mit hoher Genauigkeit erfasst.

In bevorzugter Weise wird das Linienraster in zweifacher Weise erfasst und ausgewertet. Zum einen wird - wie zuvor erläutert - das gesamte Raster erfasst und daraus die Bandkontur und Lage des Materialbandes in einem größeren Bereich erfasst. Zum anderen wird das Raster so projiziert, dass eine der Linien des Rasters entlang der Messpunkte der ersten Messeinrichtung verläuft. Dann wird diese Linie separat von einer weiteren Kamera erfasst und in der oben beschriebenen Weise ausgewertet. Es wird also eine Planheitsmessung des Materialbandes durch eine Auswertung des gesamten Rasters durchgeführt, während durch die Auswertung der einzelnen Linie eine Korrektur der Messwerte der ersten Messeinrichtung erreicht wird.

Der besondere Vorteil der zuletzt erwähnte Ausgestaltung der Erfindung besteht darin, dass zum einen nur eine Projektionseinrichtung benötigt wird, um zwei verschiedene Messungen durchführen zu können, und dass zum anderen für diese beiden Messungen nur ein Bereich des Materialbandes von Verschmutzungen freigehalten werden muss.

Im folgenden wird eine weitere Ausgestaltung des Messverfahrens beschrieben, die an sich unabhängig von der zuvor beschriebenen Erfindung ist. Mit Hilfe der durch die zweite Messeinrichtung erfolgten Linienmessung an sich, vorzugsweise aber mit Hilfe von mindestens zwei zusätzlichen Kameras, werden die räumlichen Positionen der Ränder des Materialbandes erfasst. Diese Positionen werden mit der durch die gleiche oder eine andere Messung festgestellte Bandkontur korrigiert, um die tatsächliche Bandbreite festzustellen. Denn bei einer Krümmung in Querrichtung erfassen die Messmethoden Randpositionen, deren Abstand zueinander eine zu geringe Breite des Materialbandes wiedergibt.

Als Messmethoden zur Feststellung der Bandkontur können alle bekannten Verfahren herangezogen werden. Insbesondere kann die Bandkontur durch die in der vorliegenden Anmeldung offenbarten Methoden bestimmt werden, also durch eine Vermessung des Materialbandes mit Hilfe der ersten Messeinrichtung mit Strahlungsverläufen in zwei unterschiedlichen Richtungen unter Verwendung von zwei Strahlungsquellen und jeweils zwei Detektoren für jeden Messpunkt. Oder die Bandkontur wird durch die optische Messung mittels der zweiten Messeinrichtung erfasst, wie es zuvor beschrieben worden ist.

Die Bestimmung der Querkontur mit Hilfe der zweiten Messeinrichtung unter Verwendung einer einzelnen Lichtlinie, vorzugsweise im Bereich der Messpunkte der ersten Messeinrichtung, beinhaltet die folgenden Verfahrensschritte:
- Detektion der projizierten Linie in der Pixelmatrix,
- Extraktion der projizierten Linie aus der Pixelmatrix und Bestimmung der entsprechenden Pixelkoordinaten,
- Transformation der Pixelkoordinaten in Objektkoordinaten,
- Interpolation auf äquidistante Stützstellen und Referenzierung relativ zur Referenzposition bzw. Referenzlinie.

Es handelt sich hierbei um ein besonders schnelles Verfahren zur Detektion und Extraktion von Linien in einer Pixelmatrix, und um eine besonders einfache Ermittlung der das Materialband betreffenden Objektkoordinaten. Mit Objektkoordinaten sind vorliegend die Koordinaten des Materialbands relativ zu einem in der realen Fertigungsumgebung gelegenen Referenzlinie bzw. Nulllinie oder auch Nullpunkt gemeint. Das Verfahren wird im Detail in der Figurenbeschreibung erläutert.

Nach einer weiteren Lehre, der eigenständige Bedeutung zukommt, wird das oben genannte Problem mit einer Vorrichtung mit den Merkmalen des Anspruches 10 gelöst. Diese Vorrichtung wird in der nachfolgenden Beschreibung eines Ausführungsbeispiels näher erläutert.

Im folgenden wird die Erfindung anhand einer lediglich ein Ausführungsbeispiel darstellenden Zeichnung näher erläutert. In der Zeichnung zeigten
- Fig. 1: ein erstes Ausführungsbeispiel einer erfindungsgemäßen Vorrichtung zur Durchführung des erfindungsgemäßen Verfahrens in einer schematischen Seitenansicht in Längsrichtung,
- Fig. 2: die Vorrichtung nach Fig. 1 in einer schematischen Seitenansicht in Querrichtung,
- Fig. 3: ein zweites Ausführungsbeispiel einer erfindungsgemäßen Vorrichtung zur Durchführung des erfindungsgemäßen Verfahrens in einer schematischen Seitenansicht in Längsrichtung,
- Fig. 4: die Vorrichtung nach Fig. 3 in einer schematischen Seitenansicht in Querrichtung,
- Fig. 5: ein drittes Ausführungsbeispiel einer erfindungsgemäßen Vorrichtung zur Durchführung des erfindungsgemäßen Verfahrens in einer schematischen Seitenansicht in Querrichtung,
- Fig. 6: ein viertes Ausführungsbeispiel einer erfindungsgemäßen Vorrichtung zur Durchführung des erfindungsgemäßen Verfahrens in einer schematischen Seitenansicht in Längsrichtung,

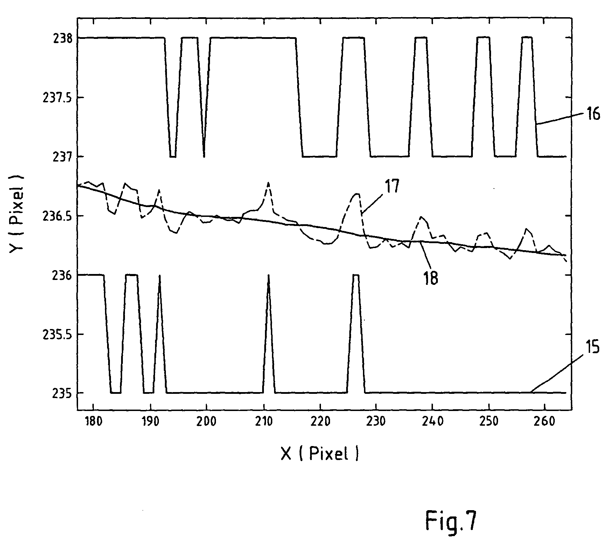

- Fig. 7: die Visualisierung von Zwischenwerten bei der Bestimmung der zur projizierten Linie korrespondierenden Pixelkoordinaten und

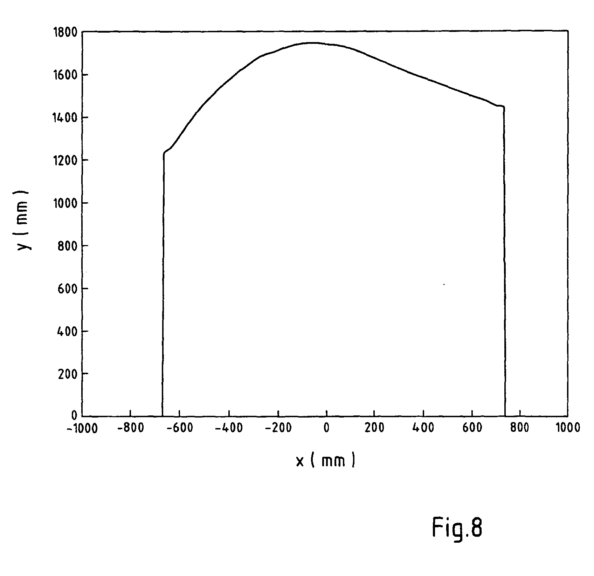

- Fig. 8: das Ergebnis der Transformation in Objektkoordinaten.

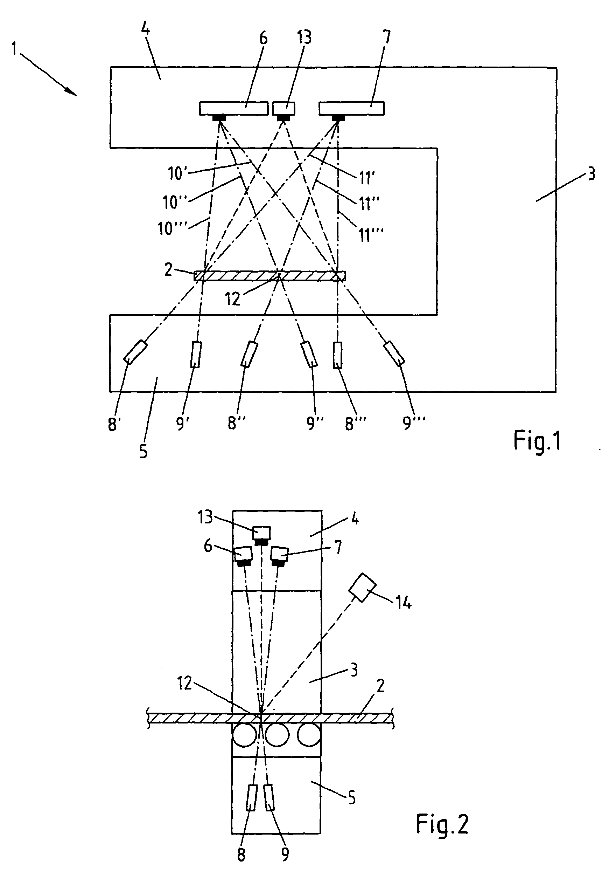

Fig. 1 zeigt eine erste Ausgestaltung einer erfindungsgemäßen Vorrichtung 1 zur Durchführung des erfindungsgemäßen Verfahrens, wobei das Materialband 2 in dieser Darstellung aus der Zeichenebene heraus bzw. in die Zeichenebene hinein, also in Längsrichtung gefördert wird. Die Vorrichtung 1 weist ein Gehäuse 3 auf, das im wesentlichen U-förmig mit zwei das Materialband umfassenden Schenkeln 4, 5 versehen ist.

Es ist eine erste Messeinrichtung zur Ermittlung der Banddicke vorgesehen. Die dargestellte Ausgestaltung der ersten Messeinrichtung ist auch dafür geeignet, selbst die Querkontur des Materialbands 2 zu erfassen, was für die Darstellung der erfindungsgemäßen Lösung allerdings keine besondere Rolle spielt. Im folgenden wird daher zunächst davon ausgegangen, dass die erste Messeinrichtung lediglich Messwerte zur Bestimmung der Banddicke liefert.

Vorliegend weist die erste Messeinrichtung zwei Strahlungsquellen 6, 7 und ein Reihe von Detektoren 8, 9 auf. Die von der Strahlungsquelle 6, 7 jeweils erzeugte Strahlung 10, 11 durchdringt das Materialband 2 an verschiedenen Messpunkten 12, die vorzugsweise in einer Linie senkrecht zur Längsrichtung angeordnet sind. In besonders einfacher Ausgestaltung kann die erste Messeinrichtung auch nur eine einzige Strahlungsquelle 6, 7 und einen einzigen Detektor 8, 9 aufweisen.

Das Verfahren zur Ermittlung der Banddicke über nicht dargestellte Auswertemittel aus den Messwerten der Detektoren, also aus der Abschwächung der Intensität der Strahlung, ist aus dem oben genannten Stand der Technik bekannt, so dass dies hier nicht weiter erläutert wird.

In Fig. 1 ist eine zweite Messeinrichtung dargestellt, die zur Ermittlung der Querkontur des Materialbands vorgesehen ist. Die zweite Messeinrichtung weist eine Projektionseinrichtung 13 auf, die vorliegend als Laserquelle, insbesondere als Linienlaser ausgestaltet ist. Die Projektionseinrichtung 13 kann auch andere Lichtquellen enthalten und im einfachsten Fall nach Art eines Dia-Projektors arbeiten.

Die Projektionseinrichtung 13 projiziert eine Linie auf die Oberfläche des Materialbands 2, die von einer CCD-Kamera 14 in einer Pixelmatrix erfasst wird. Hierfür ist die Kamera 14 von der Projektionseinrichtung 13 beabstandet bzw. um eine entsprechenden Winkel verschwenkt.

Die projizierte Linie ist bei planem Materialband 2 eine gerade Linie und die projizierte Linie verläuft senkrecht zur Oberfläche des Materialbands 2 gesehen, das optimal im Raum ausgerichtet ist und somit in Überdeckung mit dem Messpunkt 12 bzw. mit den Messpunkten 12 der ersten Messeinrichtung ist. Dies ist in Fig. 2 in Verbindung mit Fig. 1 zu erkennen. Diese Überdeckung bleibt auch bei aufschwärmenden Materialbändern bestehen und führt so zu einem besonders robusten Betrieb.

Die oben beschriebene Überdeckung zwischen projizierter Linie und Messpunkt 12 ist die Voraussetzung dafür, dass sich beide Messungen auf die gleiche Stelle des Materialbands 2 beziehen, so dass die im allgemeinen Teil der Beschreibung erläuterte rechnerische Korrektur der Messwerte der einen Messeinrichtung durch die Auswertung der Messwerte der zweiten Messeinrichtung ermöglicht wird.

Besonders interessante Möglichkeiten zur Korrektur der Messwerte sind zu erwarten, wenn die Messung der Banddicke, wie bereits angedeutet, auch Informationen zur Querkontur liefert. Dann liegen im wesentlichen redundante Messwerte zur Querkontur vor, die ggf. zu einer Steigerung der mittleren Messgenauigkeit führen können. Hierfür ist es zunächst vorgesehen, dass Messwerte an einer Mehrzahl von Messpunkten 12 aufgenommen werden, die quer zur Längsrichtung im Materialband 2 angeordnet sind. Die Messpunkte werden von mindestens zwei Detektoren 8, 9 erfasst, die jeweils Strahlung unter verschiedenen Raumwinkeln detektieren. In vorgegebenen Abständen werden Messreihen aufgenommen, die im wesentlichen alle Messpunkte 12 umfassen. Aus den Messreihen wird für jeden erfassten Messpunkt 12 die Steigung des Materialbands 2 berechnet. Durch Interpolation lässt sich dann die Querkontur des Materialbands 2 berechnen, wie aus dem Stand der Technik bekannt ist.

Während die Berechnung der Banddicke aus den Messwerten der Detektoren 8, 9 aus dem Stand der Technik bekannt ist, wird im folgenden ein besonders schnelles und robustes Verfahren zur Berechnung der Querkontur des Materialbands 2 vorgestellt.

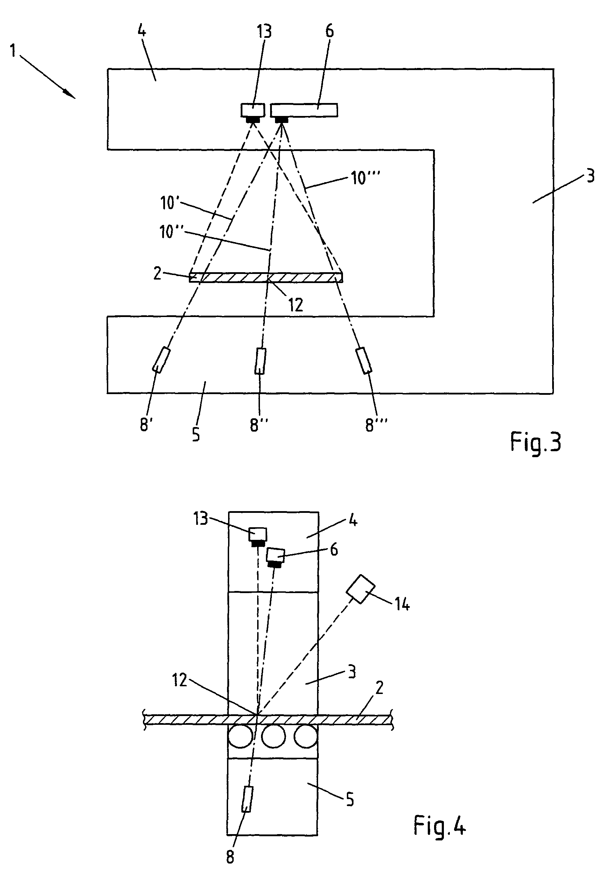

Die Fig. 3 und 4 zeigen eine weitere Ausgestaltung der vorliegenden Erfindung, die im wesentlichen mit dem ersten Ausführungsbeispiel übereinstimmt. Daher bezeichnen gleiche Bezugszeichen gleiche Bauteile, wie sie zuvor anhand der Fig. 1 und 2 beschrieben worden sind.

Unterschiedlich ist, dass jeder Messpunkt 12 der ersten Messeinrichtung nur durch einen Detektor 8 erfasst wird, also nur ein Abschwächungswert gemessen wird. Dazu ist gemäß den Fig. 3 und 4 für den gesamten Messbereich vorliegend nur eine Strahlungsquelle 6 vorgesehen.

Eine weitere nicht in den Fig. 3 und 4 dargestellte Variante besteht darin, dass mindestens zwei Strahlungsquellen vorgesehen sind, die jeweils Teilbereiche des Materialbandes 2 erfassen und jeweils ein Teil der Detektoren 8 auf jeweils eine Strahlungsquelle ausgerichtet ist.

Die Anordnung gemäß Fig. 3 und 4 ist ausreichend, um die Banddicken genau zu bestimmen. Denn auf der Basis der Messwerte der zweiten Messeinrichtung kann die genaue räumliche Lage des Materialbandes innerhalb der geometrischen Verbindung zwischen der Strahlungsquelle und dem jeweiligen Detektor bestimmt werden. Somit können die Messwerte der Detektoren 8 jeweils einer genauen Position im Materialband zugeordnet werden, zu der zusätzlich auch die Steigung im Raum bekannt ist. Daraus lässt sich dann die tatsächliche Dicke aus einem Abschwächungsmesswert des Detektors 8 ableiten.

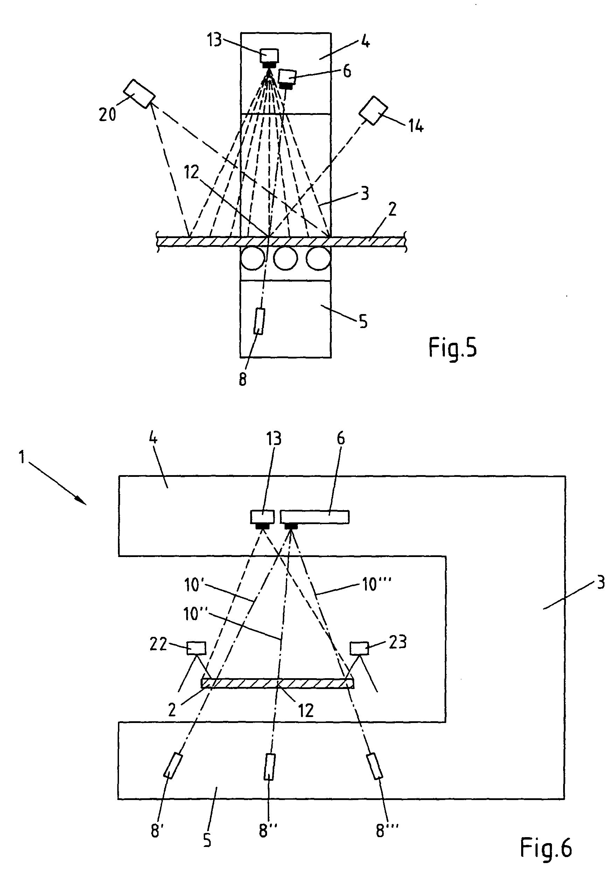

Fig. 5 zeigt ein weiteres Ausführungsbeispiel der Erfindung. Auch hier bezeichnen gleiche Bezugszeichen gleiche Bauteile, wie sie zuvor anhand der Fig. 1 bis 4 beschrieben worden sind.

Im Unterschied zu den vorigen Ausführungsbeispielen projiziert die Projektionseinrichtung 13 ein Raster von einzelnen Linien auf die Oberfläche des Materialbandes 2. Dieses ist schematisch durch eine Vielzahl von gestrichelten Linien dargestellt, die auf der Bandoberfläche enden. Das Linienraster wird vollständig von einer Kamera 20 erfasst und anschließend mit entsprechenden Auswertemitteln ausgewertet. Dadurch kann eine an sich bekannte Planheitsmessung erfolgen, die mit hoher Genauigkeit das Längs- und Querprofil des Materialbandes sowie dessen Lage im Raum erfasst.

Diese Planheitsmessung kann an sich ausreichen, um auch die Messwerte der ersten Messeinrichtung zu korrigieren, also die Abschwächungsmesswerte der Detektoren zu genauen Banddicken zu verarbeiten.

Jedoch ist die Schnelligkeit der Planheitsmessung über einen größeren Bereich des Materialbandes 2 oftmals geringer als die Messung der Abschwächungswerte. Daher wird in vorteilhafter Weise die bereits zuvor beschriebene Kamera 14 eingesetzt, um eine der Linien des Rasters separat auszuwerten. Dazu ist das Linienraster so positioniert, dass eine, vorzugsweise mittig angeordnete Linie in Überdeckung mit den Messpunkten 12 der ersten Messeinrichtung angeordnet ist. Die mittlere Linie wird dann in der zuvor beschriebenen Weise ausgewertet, wobei hier eine geringere Datenmenge anfällt und die Schnelligkeit der Auswertung ausreichend für eine Korrektur der Messwerte der ersten Messeinrichtung ist.

In Fig. 6 ist ein viertes Ausführungsbeispiel der vorliegenden Erfindung dargestellt, das im wesentlichen mit dem zweiten Ausführungsbeispiel übereinstimmt. Zusätzlich dazu sind zwei Kameras 22 und 23 vorgesehen, die die Positionen der Ränder des Materialbandes 2 vermessen. Aus den absoluten Randpositionen kann die Bandbreite wie folgt bestimmt werden. Berücksichtigt man die Bandkrümmung in Querrichtung, also die Querkontur, so können die absoluten Werte der Randpositionen in eine tatsächlich Bandbreite bei ungekrümmter Oberfläche umgerechnet werden. Somit kann die Bandbreite in erheblich genauerer Weise bestimmt werden, als es bisher möglich gewesen ist.

Dabei kommt es nicht auf die Art der Bestimmung der Querkontur an. Diese kann einerseits durch die erste Messeinrichtung des ersten Ausführungsbeispiels mittels jeweils zweier Detektoren 8 und 9 für einen Messpunkt 12 gemessen und errechnet werden. Andererseits können die optischen Methoden der zweiten Messeinrichtung angewendet werden, wie sie zuvor beschrieben worden sind. Daher hat die genaue Bestimmung der Bandbreite selbstständigen erfinderischen Charakter unabhängig von der Kombination aus erster und zweiter Messeinrichtung.

Im folgenden wird eine mögliche Auswertung der Messwerte der Kamera 14 zur Bestimmung des Linienverlaufes (Querkontur) relativ zu einer Referenzlinie oder Referenzposition erläutert.

Der erste Verfahrensschritt zur Berechnung der Querkontur ist die Detektion der projizierten Linie in der Pixelmatrix. Damit ist gemeint, dass nur diejenigen Pixel in der Pixelmatrix verbleiben sollen, die die projizierte Linie beschreiben. Da die Erstreckung der projizierten Linie in der Pixelmatrix ungefähr bekannt ist, ist die Detektion der projizierten Linie vorliegend besonders einfach. Vorliegend ist es so, dass sich die projizierte Linie in der Pixelmatrix in X-Richtung erstreckt. Damit stellt die projizierte Linie eine lokale Erhöhung des Grauwertverlaufs in jeder Spalte der Pixelmatrix dar, die durch einen Filter, der spaltenweise auf die Pixelmatrix angewandt wird, detektiert werden kann.

Das Filterprinzip besteht darin, dass für jeden einzelnen Pixel zunächst ein in Spaltenrichtung gesehen oberer und unterer Bereich bestimmt wird. Der obere bzw. untere Bereich sind symmetrisch zu dem betrachteten Pixel angeordnet und um einen Abstand (Fₐ: Filter-Anfang) vom betrachteten Pixel entfernt. Die Bereiche erstrecken sich bis zu einer bestimmten Entfernung vom betrachteten Pixel (Fₑ: Filter-Ende). Insbesondere der Wert von Fₐ hängt wesentlich von der Breite der projizierten Linie in der Pixelmatrix in Spaltenrichtung ab. Für die beiden Bereiche werden nun die Mittelwerte über die in diesen Bereichen enthaltenen Pixel gebildet. Wenn der Grauwert des betrachteten Pixels um einen vorbestimmten Wert (S_{threshold}) höher ist als der größere der beiden mittleren Grauwerte, so wird der betrachtete Pixel selektiert. Ansonsten wird er gelöscht.

Das resultierende Bild enthält nur die selektierten Pixel, die im wesentlichen zusammenhängend im Bereich der projizierten Linie sowie einzeln über das gesamte Bild verstreut sind. Da zusammenhängende Bereiche vergleichsweise leicht detektierbar sind, werden in einem folgenden Verfahrensschritt möglicherweise vorhandene Lücken in der projizierten Linie gefüllt. Da es sich ja hier um Fehlstellen handelt, ist zu erwarten, dass die Lücken im wesentlichen ein Pixel ausmachen. Es wird also für das gesamte Bild untersucht, ob in horizontaler, vertikaler oder diagonaler Richtung zwei Pixel vorhanden sind, zwischen denen sich einen Lücke befindet. Diese Lücke, bzw. das entsprechende Pixel, wird dann entsprechend selektiert. Selbstverständlich können hier weitere Strategien zum Füllen von Lücken Anwendung finden, die vorzugsweise auf die zu erwartende Linienform angepasst sind. Ein weiteres Beispiel ist das Füllen der Lücke zwischen zwei versetzten Pixeln.

Nach dem beschriebenen Füllen ggf. vorhandener Lücken wird ein sogenanntes Wichtungsbild erstellt. Dabei wird jedem Pixel die Anzahl der mit ihm verbundenen selektierten Pixel als Grauwert zugewiesen. Damit verbleiben bei entsprechender Filterung lediglich die großen zusammenhängenden Pixelbereiche, wobei die projizierte Linie erwartungsgemäß den größten zusammenhängenden Pixelbereich bildet und somit eindeutig aus der Pixelmatrix detektierbar ist. Damit ist die Detektion der projizierten Linie abgeschlossen.

Im Rahmen der Extraktion ist es nun im weiteren Verlauf des Verfahrens vorgesehen, die Vektoren der projizierten Linie in der Pixelmatrix für jeden einzelnen X-Wert (Pixelkoordinaten) zu ermitteln. Wenn die projizierte Linie in der Pixelmatrix nur ein Pixel breit wäre, wäre lediglich in jeder Spalte der höchste Grauwert zu bestimmen, wodurch die Pixelkoordinaten bekannt wären.

Allerdings ist es so, dass die projizierte Linie in der Pixelmatrix eine gewisse Breite aufweist. Um dennoch zu den gewünschten Vektoren zu gelangen, werden zunächst die Start- und die End-Position der projizierten Linie in jeder Spalte bestimmt. Dies ist in Fig. 3 dargestellt. Die untere Kurve 15 bildet die Startposition und die obere Kurve 16 bildet die End-Position.

Um in jeder Spalte einen möglichst exakten Y-Wert zu berechnen, wird hier auf das Originalbild zurückgegriffen, und zwar gezielt bezogen auf die obigen Grenzwerte. Die resultierende Berechnung der projizierten Linie zeigt die Kurve 17. Kurve 18 zeigt die Kurve 17 nach einer Filterung mittels eines Median Filters. Je nach Anwendungsfall kommen hier noch weitere Filterungen in Betracht, auf die an dieser Stelle nicht weiter eingegangen wird.

Damit sind die die projizierte Linie beschreibenden Vektoren in der Pixelmatrix bekannt. Im nächsten Verfahrensschritt werden diese Pixelkoordinaten in Objektkoordinaten transformiert.

Damit sind die Objektkoordinaten der projizierten Linie, also die Koordinaten bezogen auf eine in der realen Umgebung befindliche Referenzlinie bzw. Nulllinie bekannt. Dabei ergibt sich ein y-Wert in Objektkoordinaten für jeden Pixel in X-Pixelkoordinaten. Damit liegt die projizierte Linie nicht über äquidistante Stützstellen in x-Richtung in Objektkoordinaten vor. Eine entsprechende Korrektur lässt sich aus den ermittelten Werten durch lineare Interpolation ermitteln, so dass die Objektkoordinaten in äquidistanten Stützstellen in x-Richtung vorliegen (Fig. 4).

Abschließend sind die y-Werte noch mit der Höhe der Referenzlinie im Raum zu normieren. Die Referenzhöhe ergibt sich aus einer Messung mit einem geraden Blech oder dgl.. Die Referenzhöhe wird dann von den y-Werten der ermittelten Objektkoordinaten zu subtrahieren.

## Patentansprüche

1. Verfahren zum geometrischen Vermessen eines Materialbands (2),
- bei dem mittels einer ersten Messeinrichtung die Banddicke an mindestens einem im Materialband (2) angeordneten Messpunkt (12) ermittelt wird,
- bei dem mittels einer zweiten Messeinrichtung die Form und räumliche Lage des Materialbands (2) relativ zu einer Referenzposition ermittelt wird und
- bei dem eine Korrektur der Messwerte der ersten Messeinrichtung durch die Messwerte der zweiten Messeinrichtung durchgeführt wird.

2. Verfahren nach Anspruch 1,
- bei dem das Materialband (2) an dem mindestens einen Messpunkt (12) von der Strahlung (10, 11) mindestens einer Strahlungsquelle (6, 7) durchdrungen wird und
- bei dem die durch das Materialband (2) erzeugte Abschwächung der Intensität der Strahlung (10, 11) von mindestens einem Detektor (8, 9) ermittelt wird.

3. Verfahren nach Anspruch 2,
- bei dem Messwerte an einer Mehrzahl von Messpunkten (12) aufgenommen werden, wobei die Messpunkte quer zur vom Materialband (2) vorgegebenen Längsrichtung beabstandet angeordnet sind,
- bei dem in vorgegebenen Abständen in Längsrichtung eine im wesentlichen alle Messpunkte (12) umfassende Messreihe aufgenommen wird, und
- bei dem für jeden erfassten Messpunkt (12) die Dicke des Materialbands (2) berechnet wird.

4. Verfahren nach Anspruch 2 oder 3,
bei dem jeder Messpunkt (12) von jeweils mindestens zwei Detektoren (8, 9) erfasst wird, die jeweils Strahlung (10, 11) unter verschiedenen Raumwinkeln detektieren.

5. Verfahren nach einem der Ansprüche 1 bis 4,
- bei dem auf der Oberfläche des Materialbands (2) mit einer als optische Projektionseinrichtung (13) ausgebildete zweite Messeinrichtung mindestens eine im wesentlichen senkrecht zur Längsrichtung verlaufende Linie projiziert wird,
- bei dem die Linie mittels einer Kamera (14) erfasst wird, und
- bei dem aus der mindestens einen von der Kamera (14) aufgenommenen Linie die Form und räumliche Lage des Materialbands (2) entlang der Linie ermittelt wird.

6. Verfahren nach Anspruch 5,
bei dem die mindestens eine von der Projektionseinrichtung (13) erzeugte Linie so ausgerichtet wird, dass diese durch den mindestens einen Messpunkt (12) der ersten Messeinrichtung verläuft.

7. Verfahren nach Anspruch 5 oder 6,
- bei dem ein Raster von in Längsrichtung des Materialbandes (2) beabstandeten Linien projiziert wird,
- bei dem mit Hilfe einer Kamera (20) das Linienraster aufgenommen wird und
- bei dem anhand der Auswertung der Form des Linienrasters die Form und räumliche Lage des Materialbandes (2) zumindest teilweise im von dem Linienraster umfassten Bereich des Materialbandes (2) bestimmt wird.

8. Verfahren nach einem der Ansprüche 1 bis 7,
bei dem aus den Messwerten der zweiten Messeinrichtung die Längs- und Querkontur des Materialbandes (2) berechnet wird.

9. Verfahren nach Anspruch 8,
bei dem die Position des mindestens einen Messpunktes (12) innerhalb des Materialbandes (2) durch die gemessene räumliche Lage und Form des Materialbandes (2) relativ zur Referenzposition bestimmt wird.

10. Verfahren nach Anspruch 5 oder 6,
- bei dem die projizierte Linie in der Pixelmatrix der Kamera (14) detektiert wird,
- bei dem die projizierten Linie aus der Pixelmatrix extrahiert wird und die entsprechenden Pixelkoordinaten bestimmt werden,
- bei dem die Pixelkoordinaten in Objektkoordinaten transformiert werden und
- bei dem die Objektkoordinaten auf äquidistante Stützstellen interpoliert und relativ zu einer Referenzposition referenziert werden.

11. Verfahren nach Anspruch 10,
- bei dem zur Detektion der projizierten Linie in der Pixelmatrix für jeden Pixel ein in Y-Richtung (Pixelkoordinaten) gesehen oberer und unterer Bereich bestimmt wird,
- bei dem für beide Bereiche der mittlere Grauwert ermittelt wird,
- bei dem der größere der beiden mittleren Grauwerte ermittelt wird und
- bei dem dann, wenn der Grauwert des betrachteten Pixels um einen vorbestimmten Betrag über dem größeren mittleren Grauwert liegt, der betrachtete Pixel selektiert wird.

12. Verfahren nach Anspruch 11,
- bei dem nach der Extraktion der Linie aus der Pixelmatrix kleine Lücken zwischen zusammenhängenden selektierten Pixeln gefüllt werden und
- bei dem eine Wichtung derart erfolgt, dass jedem Pixel in einem Wichtungsbild die Anzahl der mit ihm verbundenen selektierten Pixel als Grauwert zugewiesen wird.

13. Verfahren nach Anspruch 12,
- bei dem zur Extraktion der projizierten Linie aus dem Wichtungsbild einerseits und dem Originalbild andererseits für jede X-Koordinate (Pixelkoordinaten) ein einen Punkt auf der projizierten Linie beschreibender Vektor (Pixelkoordinaten) bestimmt wird.

14. Verfahren nach einem der vorangegangenen Ansprüche,
- bei dem die räumlichen Positionen der Ränder des Materialbandes gemessen werden und
- bei dem aus der räumliche Position der Ränder des Materialbandes (2) und der ermittelten Querkontur des Materialbandes (2) die korrigierte tatsächliche Breite des Materialbandes (2) berechnet wird.

15. Vorrichtung zum geometrischen Vermessen eines Materialbands (2), insbesondere zur Durchführung des Verfahrens nach einem der Ansprüche 1 bis 14,
- mit einer ersten Messeinrichtung zur Ermittlung der Banddicke in mindestens einem im Materialband (2) angeordneten Messpunkt (12) und
- mit ersten Auswertemitteln zum Auswerten der von der ersten Messeinrichtung aufgenommenen Messwerte,
**dadurch gekennzeichnet,**
- **dass** eine zweite Messeinrichtung zur Ermittlung der Form und räumlichen Lage des Materialbands (2) relativ zu einer Referenzposition vorgesehen ist,
- **dass** zweite Auswertemittel zur Auswertung der von der zweiten Messeinrichtung aufgenommenen Messwerte vorgesehen sind und
- **dass** Korrekturmittel zum Korrigieren der Messwerte der ersten Messeinrichtung durch die Messwerte der zweiten Messeinrichtung vorgesehen sind.

16. Vorrichtung nach Anspruch 15,
**dadurch gekennzeichnet,**
- **dass** die erste Messeinrichtung mindestens eine Strahlungsquelle (6, 7) und mindestens einen Detektor (8, 9) aufweist,
- wobei der von dem mindestens einen Detektor (8, 9) erfasste Strahlungsabschnitt der von der Strahlungsquelle (6, 7) erzeugten Strahlung mindestens einen im Materialband (2) angeordneten Messpunkt (12) definiert.

17. Vorrichtung nach Anspruch 16,
**dadurch gekennzeichnet,**
- **dass** die erste Messeinrichtung mindestens zwei Strahlungsquellen (10, 11) aufweist, die quer zur Längsrichtung beabstandet zueinander angeordnet sind,
- **dass** die erste Messeinrichtung eine Mehrzahl von Detektoren (8, 9) aufweist, die quer zur Längsrichtung und beabstandet zu den Strahlungsquellen (10, 11) angeordnet sind,
- **dass** das Materialband (2) zwischen den Strahlungsquellen (10, 11) und den Detektoren (8, 9) angeordnet ist,
- **dass** die ersten Auswertemittel die von den Detektoren (8, 9) aufgenommenen Messwerte auswertet,
- **dass** jeweils zwei Detektoren (8, 9) auf zwei unterschiedliche Strahlungsquellen (10, 11) ausgerichtet sind und ein Paar von Detektoren (8, 9) bilden,
- **dass** sich die jeweils von den Detektoren (8, 9) eines Paares und den Strahlungsquellen (10, 11) gebildeten Achsen im wesentlichen im Bereich des Materialbands (2) überschneiden und somit einen Messpunkt vorgeben und
- **dass** die ersten Auswertemittel aus den Messwerten die Dicke des Materialbandes (2) in den Messpunkten (12).

18. Vorrichtung nach einem der Ansprüche 15 bis 17,
**dadurch gekennzeichnet,**
- **dass** die zweite Messeinrichtung eine Projektionseinrichtung (13), vorzugsweise eine LaserQuelle, aufweist,
- **dass** die Projektionseinrichtung (13) eine Linie auf die Oberfläche des Materialbands (2) projiziert und
- **dass** die zweite Messeinrichtung eine Kamera (14) für ein Erfassen der projizierten Linie in einer Pixelmatrix aufweist.

19. Vorrichtung nach Anspruch 18,
**dadurch gekennzeichnet,**
**dass** der von der Projektionseinrichtung (13) erzeugte Lichtstrahl durch den mindestens einen Messpunkt (12) der ersten Messeinrichtung verläuft.

20. Vorrichtung nach Anspruch 18 oder 19,
**dadurch gekennzeichnet,**
- **dass** die Projektionseinrichtung ein Raster von Linien auf die Oberfläche des Materialbands (2) projiziert und
- **dass** die zweite Messeinrichtung eine Kamera (20) für ein Erfassen des projizierten Linienrasters aufweist.

21. Vorrichtung nach Anspruch 20,
**dadurch gekennzeichnet,**
**dass** eine der Linien des Linienrasters durch den mindestens einen Messpunkt (12) der ersten Messeinrichtung verläuft.
